# FASCICULE DE BREVET EUROPEEN

(11) **EP 2 832 517 B1**
(45) Date de publication et mention de la délivrance du brevet: **20.09.2017**
(21) Numéro de dépôt: 14178454.6
(22) Date de dépôt: 25.07.2014
(51) Int. Cl.: B29C 33/14, B29C 45/00

(54) **Procédé et dispositif de positionnement d'un décor dans un moule**
Vorrichtung und Verfahren zum Positionieren eines Dekors in einem Werkzeug
Means and process for positioning a decor into a mould

(30) Priorité: 30.07.2013 FR 1357524
(43) Date de publication de la demande: 04.02.2015
(73) Titulaire: A.R.C.I.L., 95650 Puiseux Pontoise (FR)
(72) Inventeur: Chauvet, Guy, 78600 MAISONS-LAFITTE (FR)
(74) Mandataire: Gevers & Orès

(56) Documents cités:
- EP-A2- 0 358 084
- WO-A2-2005/005126
- FR-A1- 2 911 537
- FR-A1- 2 947 475

## Description

L'invention concerne le domaine de la fabrication de supports, notamment de pots alimentaires en matière plastique, comportant des décors.

Ces supports sont généralement obtenus par thermoformage de matière plastique dans des moules comportant une pluralité d'alvéoles et ces décors peuvent être disposés sur une partie de la périphérie du support, il s'agit alors d'étiquettes, ou encore sur toute la périphérie du support, il s'agit alors de bandelettes.

Le décor peut être fixé sur le support, après thermoformage. C'est notamment le cas lorsque le décor est une étiquette. On utilise alors classiquement des étiquettes autocollantes.

Le décor peut également être fixé sur le support lors de l'opération de thermoformage. C'est notamment le cas lorsque le décor est une bandelette.

Chaque décor est alors disposé dans une alvéole du moule avant de réaliser le thermoformage. Cette opération consiste à introduire un matériau plastique préchauffé dans l'alvéole qui est ensuite plaqué contre les parois de l'alvéole. Lors du thermoformage, le collage du décor sur le support est assuré par le matériau thermocollant dont est enduite la face intérieure du décor, ce matériau étant échauffé par le matériau plastique préchauffé.

Après le thermoformage, le matériau plastique est refroidi pour former un support en matière plastique, comme un pot alimentaire, dont la paroi est munie d'un décor.

De nombreux procèdes ont déjà été proposés pour positionner un décor dans une alvéole d'un moule. Pour exemple, le document WO 2005/005126 divulgue une procédé de positionnement d'un décor dans une alvéole d'un moule avec un système qui contraint la bande avec un système d'aspiration. On peut notamment citer des moyens utilisant en combinaison un piston d'introduction d'un décor dans un moule et un moule conçu pour assurer son positionnement dans l'alvéole.

De façon plus précise, un piston d'introduction de décor comporte une extrémité libre dont les dimensions extérieures sont légèrement inférieures aux dimensions de l'alvéole du moule.

Ce piston est mobile entre une position haute où il est situé au-dessus de l'alvéole et une position basse où il pénètre dans l'alvéole.

Dans la position haute, le piston est susceptible de recevoir un décor autour de son extrémité libre.

Le piston passe alors de sa position haute à sa position basse, en emportant le décor avec lui.

Le piston comporte à cet effet une pièce annulaire qui permet de pousser le décor vers le bas et donc de projeter le décor dans l'alvéole.

Lorsque le moule est réalisé en une seule partie, il comporte une arête circonférentielle contre laquelle le décor s'appuie. Ainsi, cette arête empêche que le décor ne glisse au fond de l'alvéole sous l'effet de son poids.

Cependant, on constate que cette arête crée un renfoncement dans le support obtenu après thermoformage qui est une zone affaiblie. Il apparaît donc souhaitable de l'éliminer.

Le moule peut également être réalisé en deux parties. Dans ce cas, chaque moule comporte une partie avec une pluralité d'alvéoles dont le fond est ouvert et une partie en plaque située sous le fond ouvert des alvéoles.

Lors de l'introduction des décors dans les alvéoles, la plaque est à distance des alvéoles et les décors viennent en appui sur elle. Dans un deuxième temps, la plaque est remontée contre la partie comportant les alvéoles pour constituer le fond de ces alvéoles. Ce mouvement permet de positionner le décor dans chaque alvéole.

Cependant, les moules en deux parties ne peuvent convenir qu'à la fabrication de pots d'une hauteur relativement importante.

De plus, il convient de souligner que, dans les deux cas, moule en une ou deux parties, les techniques connues ne permettent pas de positionner le décor à une hauteur quelconque.

Enfin, les techniques qui viennent d'être décrites conviennent à des décors du type bandelette qui peuvent être enroulés autour d'un piston. Cet enroulement peut être obtenu grâce à un conformateur ou grâce à un mouvement de rotation du piston.

Ces techniques permettent donc d'utiliser des décors fournis sous forme d'une bande comportant des décors accolés, les décors étant individualisés par une découpe après leur enroulement sur le piston.

Cependant, elles ne sont pas du tout adaptées à des décors du type étiquette.

En effet, une bandelette enroulée sur elle-même présente une rigidité suffisante pour pouvoir être introduite dans l'alvéole d'un moule en conservant cette position enroulée.

Ce n'est pas le cas pour une étiquette. Même si celle-ci est enroulée autour d'un piston, lors du passage de sa position haute à sa position basse, l'impulsion donnée à l'étiquette par le piston peut lui donner une orientation quelconque, non prévisible. Or, cette situation doit impérativement être évitée. En effet, les supports réalisés présentent alors un décor mal positionné, ce qui nuit à la qualité de leur aspect extérieur. En pratique, de tels supports sont commercialement inexploitable.

L'invention a pour objet un procédé et un dispositif d'introduction d'un décor dans une alvéole d'un moule qui pallient ces inconvénients, en permettant d'utiliser des décors fournis en bande et d'assurer un positionnement du décor dans le moule à la hauteur souhaitée, quelle que soit la structure du moule, en une ou deux parties, et quel que soit le type de décor, bandelette ou étiquette.
Ainsi, l'invention concerne un procédé de positionnement d'un décor dans une alvéole d'un moule, comprenant les étapes suivantes :
- fournir une bande de décors comportant une série de décors accolés les uns aux autres,
- enrouler la bande de décors autour d'au moins une partie d'un piston le piston étant à cet effet situé au-dessus de ladite alvéole dans une position haute et plus précisément dans une cavité d'un conformateur de sorte qu'un espace est ménagé pour la bande de décors entre une paroi interne de la cavité et une paroi externe du piston, la cavité débouchant sur une paroi latérale du conformateur par une ouverture et la cavité étant équipée, en outre, d'une contre-lame fixée sur le conformateur, contre-lame à laquelle est associée une lame munie d'une ouverture, la bande de décors étant à cet effet amenée grâce à des rouleaux d'entraînement au voisinage immédiat de la paroi latérale du conformateur, rouleaux auxquels sont associés des guides qui contraignent la bande de décors à passer à travers l'ouverture réalisée dans la lame et l'ouverture débouchante de la cavité pour s'insérer dans l'espace,

- couper la bande de décors pour individualiser un décor au moyen de la lame qui est susceptible de se déplacer selon une direction parallèle au plan de contact entre la contre-lame et le conformateur et perpendiculaire à un axe longitudinal du piston,
- activer des moyens pour maintenir le décor sur le piston,
- introduire le piston et le décor dans une alvéole du moule, en déplaçant le piston en translation selon son axe longitudinal jusqu'à une position basse,
- activer des moyens au niveau de l'alvéole pour assurer le maintien du décor dans le moule et désactiver les moyens de maintien du décor sur le piston, et
- retirer le piston de l'alvéole du moule.

Dans une première variante de mise en oeuvre, le décor est enroulé autour du piston en introduisant la bande de décor par poussée dans une cavité dans laquelle est placé le piston.

De façon préférée, les moyens de maintien du décor sur le piston ou dans l'alvéole d'un moule sont des moyens d'aspiration.

Dans certains cas, notamment lorsque le décor est une étiquette, la découpe de la bande pour individualiser un décor intervient après l'activation des moyens pour maintenir le décor sur le piston.

L'invention concerne également un procédé de fabrication de supports avec un décor, à l'aide d'un moule comportant une pluralité d'alvéoles, consistant à mettre en oeuvre le procédé de positionnement d'un décor selon l'invention, de façon à introduire un décor dans les alvéoles du moule, puis à réaliser une étape de formage de matière plastique dans le moule.
L'invention concerne également un dispositif de positionnement de décor dans une alvéole d'un moule, ledit décor provenant d'une bande de décors comportant une série de décors accolés les uns aux autres, ce dispositif comprenant :
- un piston susceptible de se déplacer en translation et selon son axe longitudinal entre une position haute dans laquelle le piston est situé au-dessus de l'alvéole et plus précisément dans une cavité d'un conformateur de sorte qu'un espace est ménagé pour la bande de décors entre une paroi interne de la cavité et une paroi externe du piston et une position basse, dans laquelle le piston est situé dans l'alvéole,
- des moyens pour enrouler la bande de décors autour dudit piston, lorsqu'il est en position haute, lesdits moyens comprenant le conformateur, la cavité débouchant sur une paroi latérale du conformateur par une ouverture, une lame munie d'une ouverture, de rouleaux d'entraînement pour amener la bande de décors au voisinage immédiat de la paroi latérale du conformateur, rouleaux auxquels sont associés des guides pour contraindre la bande de décors à passer à travers l'ouverture réalisée dans la lame et l'ouverture débouchante de la cavité pour s'insérer dans l'espace,
- des moyens de découpe de la bande de décors pour individualiser un décor, lesdits moyens consistant en ladite lame à laquelle est associée une contre-lame fixée sur le conformateur et équipant ladite cavité, la lame étant susceptible de se déplacer selon une direction parallèle au plan de contact entre la contre-lame et le conformateur et perpendiculaire à l'axe longitudinal du piston, des moyens de maintien dudit décor sur ledit piston, et
- des moyens de maintien dudit décor dans l'alvéole du moule.

De façon avantageuse, les moyens de maintien du décor sur le piston sont prévus dans le piston lui-même et consistent en des moyens d'aspiration.

Egalement de façon avantageuse, les moyens de maintien du décor dans l'alvéole sont prévus dans le moule lui-même et consistent en des moyens d'aspiration.

L'invention sera mieux comprise et d'autres buts, avantages et caractéristiques de celle-ci apparaîtront plus clairement à la lecture de la description qui suit et qui est faite au regard des dessins annexés, sur lesquels :
- la figure 1 illustre une vue en perspective d'une partie d'un exemple de réalisation du dispositif de positionnement de décor selon l'invention,
- la figure 2 est une vue en coupe partielle dans un plan perpendiculaire à l'axe des pistons du dispositif illustré à la figure 1, elle comporte la figure 2(a) illustrant le décor avant découpe et la figure 2 (b) illustrant le décor après découpe
- la figure 3 est une vue en perspective illustrant partiellement un piston de positionnement du dispositif selon l'invention,
- la figure 4 représente une vue schématique en coupe du dispositif selon l'invention, elle comprend les figures 4(a) à 4(c) qui illustrent trois étapes de fonctionnement,
- la figure 5 est une vue en perspective illustrant un exemple d'un piston d'introduction destiné à un décor de type étiquette,
- la figure 6 est une vue en coupe partielle dans un plan perpendiculaire à l'axe du piston d'un exemple de dispositif d'introduction de décor utilisant le piston illustré à la figure 5, et
- la figure 7 illustre les différentes étapes d'introduction d'une étiquette dans l'alvéole d'un moule avec le dispositif illustré aux figures 5 et 6 et comprend les figures 7(a) à 7(d) qui sont des vues schématiques en coupe du dispositif.

Les éléments communs aux différentes figures seront illustrés par les mêmes références.

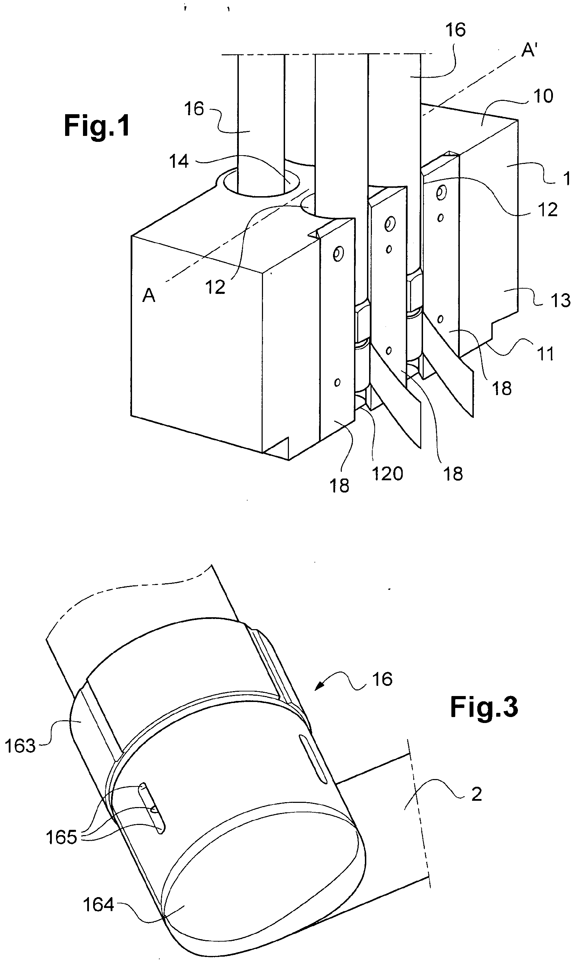

En référence à la figure 1 est illustré partiellement un exemple de dispositif de positionnement de décors selon l'invention.

La partie du dispositif illustrée à la figure 1 est destinée au positionnement de décors dans un moule comportant quatre alvéoles.

Elle comporte un élément 1, généralement appelé conformateur, qui est un élément massif percé ici de quatre cavités, réparties en deux paires, symétriques par rapport à l'axe A-A'.

Toutes ces cavités sont traversantes et elles s'étendent donc entre la face supérieure 10 et la face inférieure 11 de l'élément 1.

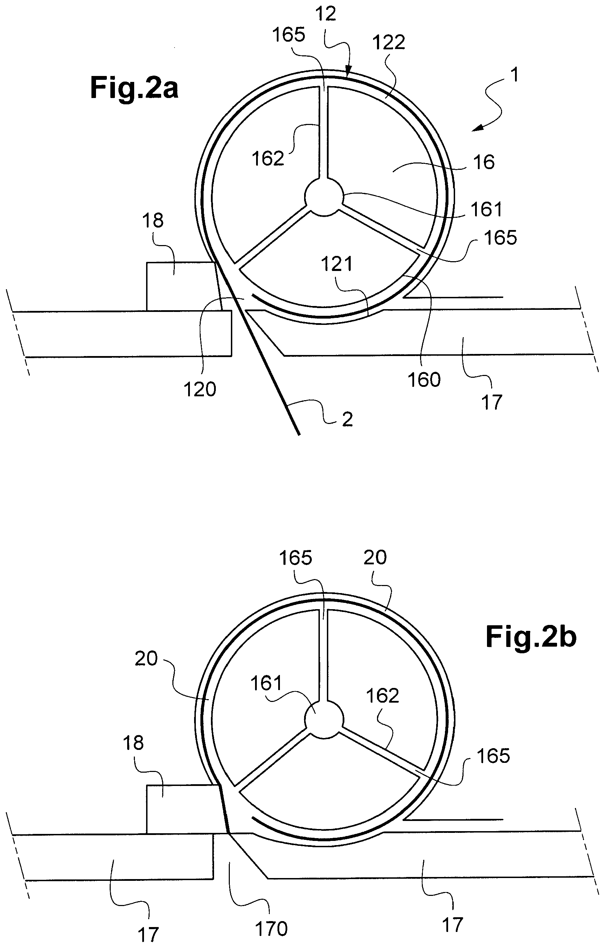

Par ailleurs, les cavités 12 de la première paire débouchent sur la paroi latérale 13 de l'élément 1, tandis que les cavités 14 de la deuxième paire débouchent sur la paroi latérale de l'élément 1, opposée à la paroi 13. L'ouverture des cavités 12 sur la paroi latérale 13 est désignée par la référence 120. Chaque cavité est équipée d'une pièce 18 fixée sur l'élément 1. Les pièces 18 sont des contre-lames et elles sont associées à une lame commune à toutes les cavités 12 (illustrée aux figures 2a et 2b). Comme cela sera expliqué par la suite, c'est par cette ouverture 120 que sera introduit le décor.

Dans chaque cavité 12, 14 de l'élément 1 se trouve un élément de transfert 16, communément dénommé piston.

Chaque piston 16 est mobile en translation selon son axe longitudinal ou encore selon l'axe longitudinal de chaque cavité 12 ou 14.

Les moyens d'actionnement de ces pistons ne sont pas illustrés sur la figure 1. Ils permettent de déplacer les pistons entre une position haute, illustrée à la figure 1 et une position basse, dans laquelle chaque piston est placé à l'intérieur d'une alvéole d'un moule.

Les figures 2(a) et 2(b) illustrent partiellement l'élément 1, vu en coupe selon un plan perpendiculaire à l'axe longitudinal des cavités 12 ou 14.

Ainsi, elles n'illustrent qu'une cavité 12, dans laquelle se trouve un piston 16. Les dimensions respectives du piston et de la cavité sont choisies de façon à ménager un espace ou passage annulaire 122 entre la paroi interne 121 de la cavité et la paroi externe 160 du piston 16.

La figure 2(a) illustre comment un décor peut être enroulé autour du piston 16.

Le décor provient d'une bande 2 comportant une série de décors accolés les uns aux autres. Cette bande est amenée grâce à des rouleaux d'entraînement (non représentés sur la figure) au voisinage immédiat de la paroi latérale 13 de l'élément 1. A ces rouleaux, sont associés des guides (non illustrés sur la figure) qui contraignent la bande 2 à passer à travers l'ouverture 170 réalisée dans la lame 17 et l'ouverture 120 pour s'insérer dans le passage 122.

La bande 2 est classiquement réalisée en papier ou en un matériau thermoplastique. Elle est donc relativement rigide.

De ce fait, l'enroulement de la bande autour du piston 16 s'effectue en actionnant les rouleaux d'entraînement pour faire avancer la bande dans le passage 122.

Dans l'exemple illustré, la bande adopte donc une forme cylindrique.

Une fois cet enroulement effectué, la bande est coupée pour individualiser un décor. Celui-ci se présente ici sous la forme d'une bandelette. Le décor 20 après découpe est illustré sur la figure 2(b).

Les moyens de découpe sont classiques. Ils sont illustrés schématiquement sur les figures 2(a) et 2(b) sous forme d'une lame 17 qui est
susceptible de se déplacer selon une direction parallèle au plan de contact entre les pièces 18 et l'élément 1 et perpendiculaire à l'axe longitudinal du piston 16. Cette lame 17 comporte autant d'ouvertures 170 que de cavités 12.

L'invention n'est pas limitée aux moyens d'enroulement d'un décor autour d'un piston qui viennent d'être décrits.

En effet, l'enroulement peut également être réalisé au moyen d'un piston susceptible de tourner autour de son axe, la rotation du piston permettant cet enroulement. La présence d'un conformateur n'est alors pas nécessaire. Ce mode de réalisation n'appartient pas à l'invention.

Les figures 2(a) et 2(b) montrent que le piston 16 comporte un canal central 161, lequel communique avec des moyens de mise sous vide, non illustrés sur la figure.

Dans l'ensemble de la description, on comprend par moyens de mise sous vide des moyens permettant de créer une dépression par rapport à la pression atmosphérique.

Ce canal central 161 s'étend selon l'axe longitudinal du piston 16. Il est en communication fluidique avec des canaux radiaux 162, ici au nombre de trois. Ces canaux 162 s'étendent dans un plan perpendiculaire à l'axe du piston 16 et débouchent sur la paroi extérieure 160 du piston.

Par ailleurs, pour assurer un maintien régulier du décor sur le piston 16, les canaux 162 sont par exemple répartis à 120° l'un de l'autre.

Le nombre de canaux ainsi que leur répartition angulaire peuvent être modifiés en fonction de la taille du piston et du décor à enrouler.

Il est maintenant fait référence à la figure 3 qui illustre la partie inférieure du piston.

La figure 3 montre que le piston présente une section cylindrique. Cette section n'est pas constante puisqu'elle comporte une partie annulaire 163 dont le diamètre est légèrement plus important que celui du reste du piston.

Cette partie 163 est située à une distance suffisante de la paroi d'extrémité 164 du piston pour que la bande 2 puisse s'enrouler sur le piston, sous la partie annulaire 163.

La figure 3 illustre un exemple de réalisation dans lequel chaque canal radial 162 du piston est conçu pour être en communication avec trois orifices d'aspiration 165.

Ainsi, une fois que la bande 2 a été enroulée autour du piston et coupée, les moyens de mise sous vide sont activés et mis en communication avec le canal central 161, ce qui permet d'activer les orifices d'aspiration 165 et d'assurer le maintien du décor sur le piston 16.

Après la découpe du décor et avant l'activation des moyens de mise sous vide, on peut translater légèrement le piston en direction du moule pour assurer un bon positionnement du décor autour du piston et éliminer toute vrille éventuelle. Cette translation est de quelques millimètres, voire 1 cm.

En effet, le décor reste en place dans le passage 122 sans qu'il soit nécessaire de le maintenir lors de la découpe.

Les mêmes opérations sont de préférence effectuées sur les quatre pistons illustrés à la figure 1, de façon simultanée.

Les pistons sont alors actionnés pour être placés dans leur position basse, de façon à être insérés dans les alvéoles du moule.

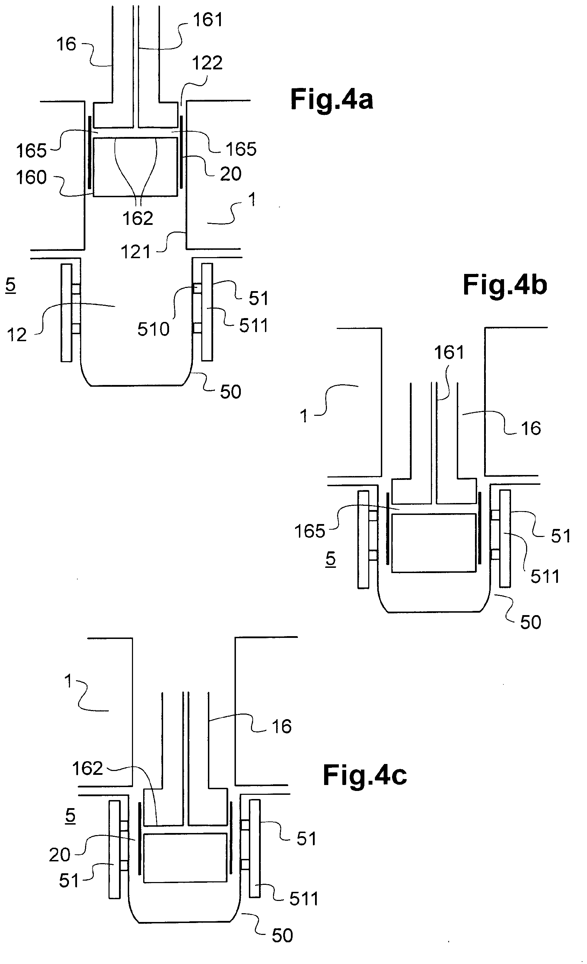

La figure 4(a) montre le piston 16 dans sa position haute, correspondant à celle illustrée aux figures 1 et 2, tandis que les figures 4(b) et 4(c) montrent le piston dans sa position basse. Entre les deux positions, le piston a effectué un mouvement de translation selon son axe longitudinal.

Dans la position illustrée à la figure 4(a), la bande 2 est enroulée autour du piston, découpée et les moyens de mise sous vide sont actionnés pour maintenir le décor 20 autour du piston.

La cavité 12 est située au-dessus d'une alvéole 50 d'un moule 5. Avec l'exemple de conformateur illustré à la figure 1, le moule 5 comporte quatre alvéoles.

Autour de chaque alvéole 50 sont prévus des moyens 51 de maintien d'un décor. Ces moyens sont ici formés par des orifices 510 qui débouchent sur la paroi de l'alvéole et qui sont reliés à des moyens de mise sous vide (non représentés) par un canal 511.

Le décor étant sous la forme d'une bandelette, ces moyens 51 sont conçus pour assurer le maintien de la bandelette sur toute la périphérie de l'alvéole. En pratique, les orifices d'aspiration 510 sont donc répartis régulièrement sur la paroi de l'alvéole.

La figure 4(b) illustre le piston 16 dans sa position basse. Il est inséré dans l'alvéole 50 et les orifices 165 sont toujours activés, ce qui permet de maintenir le décor sur le piston.

A la figure 4(c), les orifices 165 du piston sont désactivés. Par contre, les moyens de mise sous vide des moyens 51 associés à l'alvéole sont activés. Les orifices 510 sont également activés et le décor 20 est alors maintenu sur la paroi de l'alvéole.

Le piston 16 comme tous les pistons de l'élément 1 peut alors revenir dans sa position haute pour qu'un nouveau décor soit enroulé.

Ces moyens 51 de maintien du décor dans l'alvéole 50 sont maintenus actifs pendant l'étape de formage qui suit celle d'introduction des décors dans les alvéoles.

Le dispositif selon l'invention qui vient d'être décrit convient pour des décors du type bandelette qui sont enroulés tout autour du piston.

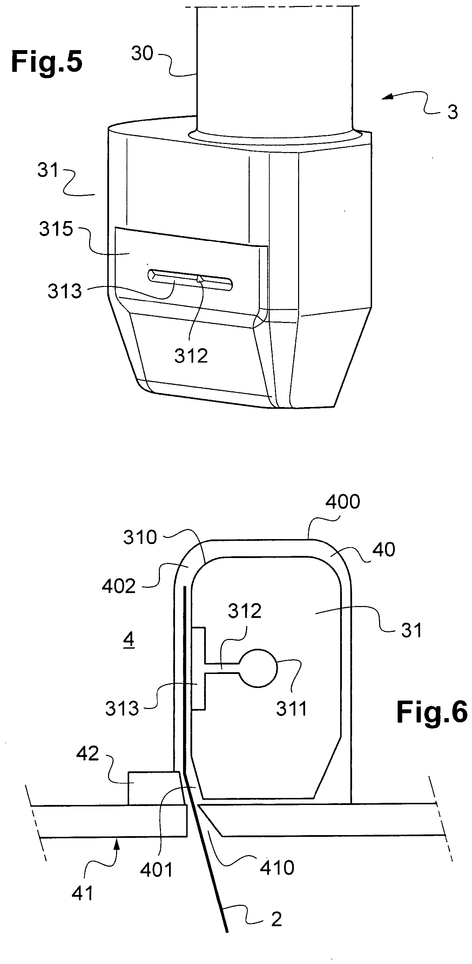

Il est maintenant fait référence aux figures 5 à 7 qui décrivent un autre mode de réalisation du dispositif selon l'invention, conçu pour le positionnement de décors du type étiquette.

Ainsi, la figure 5 illustre un piston 3 qui comporte une partie globalement cylindrique 30 dont une extrémité est reliée aux moyens d'actionnement du piston (non représentés sur la figure) et dont l'autre extrémité est reliée à une partie 31 présentant une forme spécifique, adaptée à celle des alvéoles du moule.

Bien entendu, ce piston 3 est destiné à être inséré dans un élément conformateur, comme l'élément 1 décrit en référence à la figure 1.

La figure 6 illustre de façon partielle un tel élément 4. La figure 6 montre ainsi une cavité 40 qui traverse l'élément 4 et dans laquelle se trouve le piston 3. On comprend que la figure 6 est une vue en coupe de l'élément 4, dans un plan perpendiculaire au piston 3, cette coupe étant réalisée au niveau de l'élément 31.

Cette cavité 40 débouche sur la paroi latérale 41 de l'élément 4 par l'ouverture 401.

La figure 6 n'illustre qu'une seule cavité 40 et donc un seul piston 3. Cependant, le nombre de cavités et de pistons présents dans l'élément 4 dépend bien sûr du nombre d'alvéoles présentes dans le moule auquel est associé l'élément conformateur 4.

La figure 5 montre que la paroi extérieure de la partie 31 du piston comporte une face plane 315.

Par ailleurs, la figure 6 montre que le piston 3 est traversé par un canal central 311 qui s'étend selon l'axe longitudinal du piston.

Ce canal central est en communication fluidique avec un canal transversal 312 qui débouche sur la face plane 315. Ce canal 312 s'étend dans un plan perpendiculaire à l'axe longitudinal du piston 3.

Les figures 5 et 6 montrent que la face 315 comporte une fente 313 sur laquelle débouche le canal 312.

Comme expliqué au regard de la figure 2, le canal central 312 est en communication avec des moyens de mise sous vide.

L'invention n'est pas limitée à ce mode de réalisation. Le nombre de canaux et de fentes peut être modifié en fonction des dimensions du piston et du décor.

Comme également décrit en référence à la figure 2, des moyens sont prévus pour amener une bande de décors 2 dans la cavité 40 et, plus précisément, dans le passage 402 ménagé entre la paroi intérieure 400 de la cavité 40 et la paroi extérieure 310 de la partie 31.

Grâce à des rouleaux d'entraînement (non représentés), la bande 2 est contrainte de passer dans l'ouverture 410 de la lame 41 et l'ouverture 401 de la cavité et d'avancer dans le passage 402 ménagé entre la cavité et le piston. La bande vient alors recouvrir la face plane 315 du piston.

Ainsi, dans ce mode de réalisation du dispositif selon l'invention, le décor n'est enroulé qu'autour d'une partie du piston, ici une paroi plane.

Des moyens de découpe permettent de couper la bande 2 afin d'individualiser une étiquette 21. Ils comportent la lame 41, percée d'ouvertures 410 et commune à plusieurs cavités, et une contre-lame 42 par cavité.

Par ailleurs, les moyens de mise sous vide sont activés et mis en communication avec le canal central 311. Ceci permet d'activer la fente d'aspiration 313 qui assure ainsi le maintien de l'étiquette sur la partie plane 315.

Les moyens de mise sous vide sont, de préférence, activés avant la découpe de la bande, dans la mesure où le maintien de l'étiquette dans le passage 402 ne peut pas être assuré par une simple adhérence.

Tous les pistons de l'élément conformateur 4 sont ensuite actionnés pour passer dans leur position basse et être ainsi positionnés à l'intérieur d'une alvéole d'un moule.

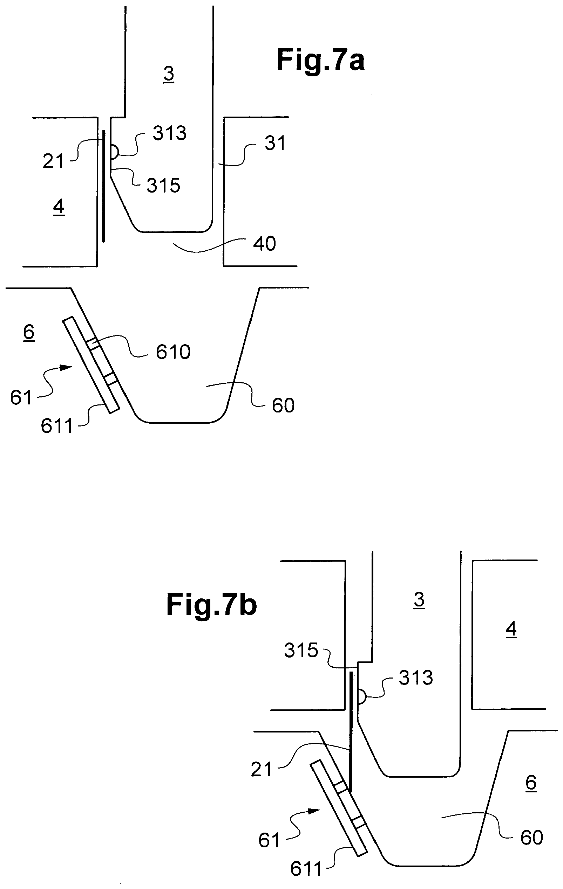

La figure 7(a) montre le piston 3 dans sa position haute correspondant à celle illustrée à la figure 6.

Dans cette position, la bande 2 est enroulée autour de la partie d'extrémité 31 du piston, découpée et les moyens de mise sous vide sont actionnés pour maintenir le décor 21 autour du piston.

La cavité 40 est située est située au-dessus d'une alvéole 60 d'un moule 6.

Des moyens 61 de maintien de cette étiquette sont prévus pour l'alvéole 60. Ces moyens comprennent des orifices 610 qui débouchent sur la paroi de l'alvéole et qui sont reliés à des moyens de mise sous vide (non représentés) par un canal 611.

Contrairement aux moyens 51 décrits en référence aux figures 4(a) à (c), ces orifices 610 ne sont pas répartis sur toute la périphérie de l'alvéole. Ils sont prévus dans la région de l'alvéole qui doit recevoir l'étiquette 21.

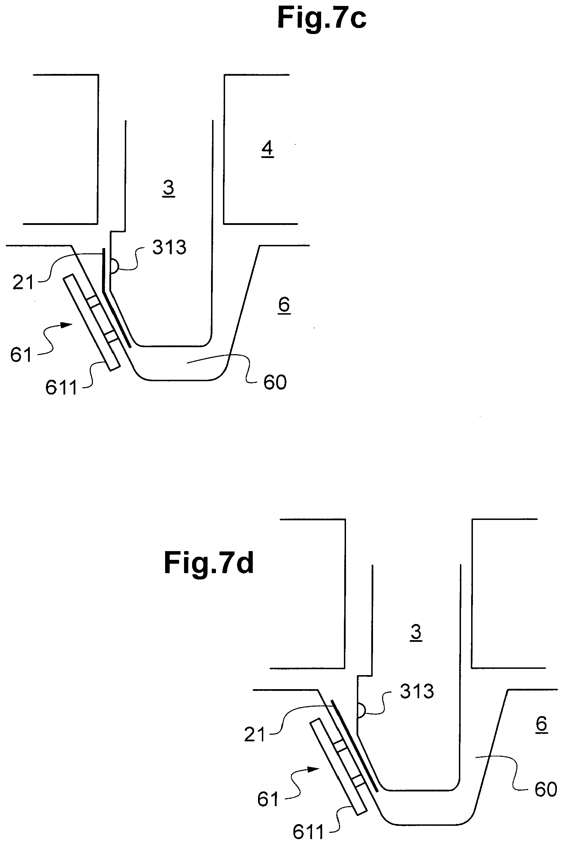

La figure 7(b) illustre le piston 3 lors de son passage de la position haute illustrée par la figure 7(a) vers la position basse illustrée aux figures 7(c) et 7(d).

Lorsque le piston 3 est déplacé vers l'alvéole 60, l'étiquette 21 est bien maintenue sur la partie plane 315 de la partie 31 du piston, grâce aux moyens de mise sous vide qui ont été activés et qui permettent de rendre active la rainure d'aspiration 313.

La figure 7(b) montre que, du fait de la forme de l'alvéole 60 et de la taille de l'étiquette, celle-ci vient en contact avec la paroi de l'alvéole avant que le piston ne soit dans sa position basse.

Le piston poursuit son mouvement de translation pour atteindre sa position basse illustrée par la figure 7(c). Il est alors inséré dans l'alvéole 60.

La fente d'aspiration 313 est toujours active, ce qui permet d'assurer le maintien de l'étiquette 21 sur le piston 3.

La figure 7(c) montre que, dans cette position basse du piston 3, la partie inférieure de l'étiquette 21 est pliée et suit le profil de l'alvéole 60.

A la figure 7(d), le piston 3 est toujours en position basse. Cependant, la fente d'aspiration 313 est désactivée, tandis que les moyens 61 de maintien de l'étiquette 21 dans l'alvéole sont activés.

Grâce à ces moyens 61 et aux orifices d'aspiration 610 qui sont activés, l'étiquette 21 est maintenue contre la paroi de l'alvéole 60.

Ces moyens de maintien 60 sont maintenus actifs pendant l'étape de formage qui suit celle d'introduction des décors dans les alvéoles du moule.

L'invention n'est pas limitée au dispositif qui vient d'être décrit pour le positionnement d'étiquettes. En particulier, la taille de l'étiquette ou la forme du moule peuvent ne pas provoquer un pliage de l'étiquette avant son complet positionnement. Cependant, même lorsque ce pliage intervient, un bon positionnement de l'étiquette peut être obtenu.

La description qui précède montre que le dispositif de positionnement de décor selon l'invention permet d'assurer le bon positionnement du décor qu'il se présente sous la forme d'une bandelette ou d'une étiquette. Ceci est confirmé par des essais.

Ce bon positionnement est assuré grâce au contrôle du mouvement de translation du piston lorsqu'il passe de sa position haute à sa position basse, ce qui permet de placer le décor à l'endroit souhaité du moule, c'est-à-dire à une hauteur quelconque de l'alvéole.

Ce contrôle est effectué avec précision en pilotant les moyens d'actionnement du piston.

En effet, une fois le piston positionné à la bonne hauteur dans l'alvéole, le décor passe du piston à la paroi de l'alvéole en désactivant les moyens de maintien prévus sur le piston et en activant ceux prévus au niveau de l'alvéole.

Cette désactivation/activation permet d'assurer le transfert du décor sans modifier son positionnement.

Ainsi, le dispositif selon l'invention peut être mis en oeuvre avec un moule très simplifié, ne comportant par exemple qu'une seule partie et dépourvu de tout moyen de maintien mécanique d'un décor dans l'alvéole, telle qu'une arête circonférentielle.

De plus, le dispositif selon l'invention permet d'éviter les risques de vrille du décor, lors de l'opération de formage. Ceci présente un avantage par rapport aux techniques connues et notamment les moules comportant une arête circonférentielle.

Dans la description qui précède, les moyens de maintien d'un décor sur le piston ou dans l'alvéole d'un moule sont des moyens d'aspiration. D'autres moyens non mécaniques pourraient être envisagés, comme des moyens générant de l'électricité statique.

Les signes de référence insérés après les caractéristiques techniques figurant dans les revendications ont pour seul but de faciliter la compréhension de ces dernières et ne sauraient en limiter la portée.

## Revendications

1. Procédé de positionnement d'un décor (20, 21) dans une alvéole (50, 60) d'un moule (5, 6), comprenant les étapes suivantes :
- fournir une bande (2) de décors comportant une série de décors accolés les uns aux autres,
- enrouler la bande de décors (20, 21) autour d'au moins une partie d'un piston (16, 3) le piston étant à cet effet situé au-dessus de ladite alvéole dans une position haute et plus précisément dans une cavité (12, 14) d'un conformateur (1) de sorte qu'un espace (122) est ménagé pour la bande de décors entre une paroi interne (121) de la cavité et une paroi externe (160) du piston, la cavité débouchant sur une paroi latérale (13) du conformateur (1) par une ouverture (120) et la cavité étant équipée, en outre, d'une contre-lame (18) fixée sur le conformateur (1), contre-lame à laquelle est associée une lame (17) munie d'une ouverture (170), la bande de décors étant à cet effet amenée grâce à des rouleaux d'entraînement au voisinage immédiat de la paroi latérale (13) du conformateur, rouleaux auxquels sont associés des guides qui contraignent la bande de décors à passer à travers l'ouverture (170) réalisée dans la lame (17) et l'ouverture (120) débouchante de la cavité pour s'insérer dans l'espace (122),
- couper la bande (2) de décors pour individualiser un décor au moyen de la lame (17) qui est susceptible de se déplacer selon une direction parallèle au plan de contact entre la contre-lame (18) et le conformateur (1) et perpendiculaire à un axe longitudinal du piston (16),,
- activer des moyens (161, 162 ; 311, 312, 313) pour maintenir le décor sur le piston,
- introduire le piston et le décor dans une alvéole (50, 60) du moule (5, 6), en déplaçant le piston en translation selon son axe longitudinal jusqu'à une position basse,
- activer des moyens (51, 61) au niveau de l'alvéole (5, 6) pour assurer le maintien du décor (20, 21) dans le moule et désactiver les moyens de maintien du décor sur le piston, et
- retirer le piston de l'alvéole du moule.

2. Procédé selon la revendication 1, dans lequel le décor est enroulé autour du piston en introduisant la bande de décor par poussée dans une cavité (12, 40) dans laquelle est placé le piston (16, 3).

3. Procédé selon l'une des revendications 1 ou 2, dans lequel les moyens de maintien du décor sur le piston ou dans l'alvéole d'un moule sont des moyens d'aspiration.

4. Procédé selon l'une des revendications 1 à 3, dans lequel la découpe de la bande pour individualiser un décor intervient après l'activation des moyens pour maintenir le décor sur le piston.

5. Procédé de fabrication de supports avec un décor, à l'aide d'un moule (5, 6) comportant une pluralité d'alvéoles (50, 60) consistant à mettre en oeuvre le procédé de positionnement d'un décor selon l'une des revendications 1 à 4, de façon à introduire un décor (20, 21) dans les alvéoles du moule, puis à réaliser une étape de formage de matière plastique dans le moule.

6. Dispositif de positionnement de décor (20, 21) dans une alvéole (50, 60) d'un moule (5, 6), ledit décor provenant d'une bande (2) de décors comportant une série de décors accolés les uns aux autres, ce dispositif comprenant :
- un piston (16, 3) susceptible de se déplacer en translation et selon son axe longitudinal entre une position haute dans laquelle le piston est situé au-dessus de l'alvéole et plus précisément dans une cavité (12, 14) d'un conformateur de sorte qu'un espace (122) est ménagé pour la bande de décors entre une paroi interne (121) de la cavité et une paroi externe (160) du piston et une position basse, dans laquelle le piston est situé dans l'alvéole,
- des moyens (1, 4) pour enrouler la bande (2) de décors autour dudit piston, lorsqu'il est en position haute, lesdits moyens (1, 4) comprenant le conformateur, la cavité débouchant sur une paroi latérale (13) du conformateur par une ouverture (120), une lame (17) munie d'une ouverture (170), de rouleaux d'entraînement pour amener la bande de décors au voisinage immédiat de la paroi latérale (13) du conformateur, rouleaux auxquels sont associés des guides pour contraindre la bande de décors à passer à travers l'ouverture (170) réalisée dans la lame (17) et l'ouverture (120) débouchante de la cavité pour s'insérer dans l'espace (122),
- des moyens de découpe de la bande (2) de décors pour individualiser un décor (20,21), lesdits moyens consistant en ladite lame (17) à laquelle est associée une contre-lame (18) fixée sur le conformateur (1) et équipant ladite cavité, la lame (17) étant susceptible de se déplacer selon une direction parallèle au plan de contact entre la contre-lame (18) et le conformateur (1) et perpendiculaire à l'axe longitudinal du piston (16), des moyens de maintien (161, 162 ; 311, 312, 313) dudit décor sur ledit piston, et
- des moyens de maintien (51, 61) dudit décor (20, 21) dans l'alvéole du moule.

7. Dispositif selon la revendication 6, dans lequel les moyens de maintien du décor sur le piston et les moyens de maintien du décor dans l'alvéole consistent en des moyens d'aspiration.

## Patentansprüche

1. Verfahren zum Positionieren eines Dekors (20, 21) in einer Zelle (50, 60) eines Werkzeugs (5, 6), das die folgenden Schritte umfasst:
- Liefern eines Bandes (2) von Dekoren, das eine Reihe von Dekoren umfasst, die aneinanderhängen,
- Aufwickeln des Bandes von Dekoren (20, 21) um mindestens einen Teil eines Kolbens (16, 3), wobei der Kolben sich zu diesem Zweck über der Zelle in einer hohen Position und genauer gesagt in einem Hohlraum (12, 14) einer Formungsvorrichtung (1) befindet, derart, dass ein Raum (122) für das Band von Dekoren zwischen einer Innenwand (121) des Hohlraums und einer Außenwand (160) des Kolbens eingerichtet ist, wobei der Hohlraum durch eine Öffnung (120) auf einer Seitenwand (13) der Formungsvorrichtung (1) mündet und der Hohlraum ferner mit einer Gegenschneide (18) ausgerüstet ist, die auf der Formungsvorrichtung (1) befestigt ist, wobei der Gegenschneide eine Schneide (17) zugehörig ist, die mit einer Öffnung (170) versehen ist, wobei das Band von Dekoren zu diesem Zweck mittels Mitnehmerrollen in der unmittelbaren Nachbarschaft der Seitenwand (13) der Formungsvorrichtung zugeführt wird, wobei den Rollen Führungen zugehörig sind, die das Band von Dekoren zwingen, die Öffnung (170), die in der Schneide (17) hergestellt ist, und die Öffnung (120) zu durchqueren, die aus dem Hohlraum mündet, um sich in den Raum (122) einzufügen,
- Schneiden des Bandes (2) von Dekoren zum Vereinzeln eines Dekors mittels der Schneide (17), die sich entlang einer Richtung parallel zur Ebene der Berührung zwischen der Gegenschneide (18) und der Formungsvorrichtung (1) und senkrecht zu einer Längsachse des Kolbens (16) verschieben kann,
- Aktivieren der Mittel (161, 162; 311, 312, 313) zum Halten des Dekors auf dem Kolben,
- Einführen des Kolbens und des Dekors in eine Zelle (50, 60) des Werkzeugs (5, 6) durch translatorisches Verschieben des Kolbens entlang seiner Längsachse bis zu einer niedrigen Position,
- Aktivieren der Mittel (51, 61) im Bereich der Zelle (5, 6), um das Halten des Dekors (20, 21) in der Form zu gewährleisten und die Mittel zum Halten des Dekors auf dem Kolben zu deaktivieren, und
- Entfernen des Kolbens aus der Zelle des Werkzeugs.

2. Verfahren nach Anspruch 1, wobei das Dekor um den Kolben aufgewickelt wird, indem das Dekorband durch Schieben in einen Hohlraum (12, 40) eingeführt wird, in dem der Kolben (16, 3) platziert ist.

3. Verfahren nach einem der Ansprüche 1 oder 2, wobei die Mittel zum Halten des Dekors auf dem Kolben oder in der Zelle eines Werkzeugs Ansaugmittel sind.

4. Verfahren nach einem der Ansprüche 1 bis 3, wobei das Schneiden des Bandes zum Vereinzeln eines Dekors nach der Aktivierung der Mittel zum Halten des Dekors auf dem Kolben erfolgt.

5. Verfahren zur Herstellung von Trägern mit einem Dekor mittels eines Werkzeugs (5, 6), das mehrere Zellen (50, 60) umfasst, das im Durchführen des Verfahrens zum Positionieren eines Dekors nach einem der Ansprüche 1 bis 4, derart dass ein Dekor (20, 21) in die Zellen des Werkzeugs eingeführt wird, und dann im Ausführen eines Schritts zum Formen von Kunststoff in dem Werkzeug besteht.

6. Vorrichtung zum Positionieren von Dekor (20, 21) in einer Zelle (50, 60) eines Werkzeugs (5, 6), wobei das Dekor von einem Band (2) von Dekoren stammt, das eine Reihe von Dekoren umfasst, die aneinanderhängen, wobei diese Vorrichtung Folgendes umfasst:
- einen Kolben (16, 3), der sich translatorisch und entlang seiner Längsachse zwischen einer hohen Position, in der der Kolben sich über der Zelle und genauer gesagt in einem Hohlraum (12, 14) einer Formungsvorrichtung befindet, derart, dass ein Raum (122) für das Band von Dekoren zwischen einer Innenwand (121) des Hohlraums und einer Außenwand (160) des Kolbens eingerichtet ist, und einer niedrigen Position bewegen kann, in der der Kolben sich in der Zelle befindet,
- Mittel (1, 4) zum Aufwickeln des Bandes (2) von Dekoren um den Kolben, wenn er sich in der hohen Position befindet, wobei die Mittel (1, 4) die Formungsvorrichtung, den Hohlraum, der durch eine Öffnung (120) auf einer Seitenwand (13) der Formungsvorrichtung mündet, eine Schneide (17), die mit einer Öffnung (170) versehen ist, und Mitnehmerrollen zum Zuführen des Bandes von Dekoren zur unmittelbaren Nähe der Seitenwand (13) der Formungsvorrichtung umfassen, wobei den Rollen Führungen zugehörig sind, um das Band von Dekoren zu zwingen, die Öffnung (170), die in der Schneide (17) hergestellt ist, und die Öffnung (120) zu durchqueren, die aus dem Hohlraum mündet, um sich in den Raum (122) einzufügen,
- Mittel zum Schneiden des Bandes (2) von Dekoren zum Vereinzeln eines Dekors (20, 21), wobei die Mittel aus der Schneide (17) bestehen, der eine Gegenschneide (18) zugehörig ist, die auf der Formungsvorrichtung (1) befestigt ist und den Hohlraum ausstattet, wobei die Schneide (17) sich entlang einer Richtung parallel zur Berührungsebene zwischen der Gegenschneide (18) und der Formungsvorrichtung (1) und senkrecht zur Längsachse des Kolbens (16) verschieben kann, Mittel (161, 162; 311, 312, 313) zum Halten des Dekors auf dem Kolben, und
- Mittel (51, 61) zum Halten des Dekors (20, 21) in der Zelle des Werkzeugs.

7. Vorrichtung nach Anspruch 6, wobei die Mittel zum Halten des Dekors auf dem Kolben und die Mittel zum Halten des Dekors in der Zelle aus Ansaugmitteln bestehen.

## Claims

1. A method for positioning a decoration (20, 21) into a cell (50, 60) of a mold (5, 6), comprising the following steps:
- providing a strip (2) of decorations including a series of decorations alongside one another,
- winding the strip of decorations (20, 21) around at least part of the piston (16, 3), the piston to that end being situated above said cell in a high position, and more specifically in a cavity (12, 14) of a conformator (1) such that a space (122) is arranged for the strip of decorations between an inner wall (121) of the cavity and an outer wall (160) of the piston, the cavity emerging on a side wall (13) of the conformator (1) by an opening (120) and the cavity further being equipped with a rebound leaf (18) fastened on the conformator (1), rebound leaf with which a leaf (17) is associated provided with an opening (170), the strip of decorations to that end being brought, using driving rollers, into the immediate vicinity of the side wall (13) of the conformator, rollers with which guides are associated that force the strip of decorations to pass through the opening (170) made in the leaf (17) and the through opening (120) of the cavity to be inserted into the space (122),
- cutting the strip (2) of decorations to individualize a decoration using the strip (17) that is able to move in a direction parallel to the contact plane between the rebound leaf (18) and the conformator (1) and perpendicular to a longitudinal axis of the piston (16),
- activating means (161, 162; 311, 312, 313) for keeping the decoration on the piston,
- introducing the piston and the decoration into a cell (50, 60) of the mold (5, 6), by translating the piston along its longitudinal axis to a low position,
- activating means (51, 61) at the cell (5, 6) to ensure that the decoration (20, 21) is kept in the mold and to deactivate the means for keeping the decoration on the piston, and
- removing the piston from the cell of the mold.

2. The method according to claim 1, wherein the decoration is wound around the piston by inserting the decoration strip by pushing into a cavity (12, 40) in which the piston (16, 3) is placed.

3. The method according to one of claims 1 or 2, wherein the means for keeping the decoration on the piston or in the cell of a mold are suction means.

4. The method according to one of claims 1 to 3, wherein the cutting of the strip to individualize a decoration occurs after the activation of the means for keeping the decoration on the piston.

5. A method for manufacturing supports with a decoration, using a mold (5, 6) including a plurality of cells (50, 60) consisting of carrying out the method for positioning a decoration according to one of claims 1 to 4, so as to introduce a decoration (20, 21) into the cells of the mold, then carrying out a step for forming plastic material in the mold.

6. A device for positioning a decoration (20, 21) in a cell (50, 60) of a mold (5, 6), said decoration coming from a strip (2) of decorations including a series of decorations alongside one another, this device comprising:
- a piston (16, 3) able to be translated along its longitudinal axis between a high position, in which the piston is situated above the cell, and more specifically in a cavity (12, 14) of a conformator such that a space (122) is arranged for the strip of decorations between an inner wall (121) of the cavity and an outer wall (160) of the piston, and a low position, in which the piston is situated in the cell,
- means (1, 4) for winding the strip (2) of decorations around said piston, when it is in the high position, said means (1, 4) comprising the conformator, the cavity emerging on a side wall (13) of the conformator by an opening (120), a leaf (17) provided with an opening (170), driving rollers to bring the strip of decorations into the immediate vicinity of the side wall (13) of the conformator, rollers with which guides are associated to force the strip of decorations to pass through the opening (170) made in the leaf (17) and the through opening (120) of the cavity to be inserted into the space (122),
- means for cutting the strip (2) of decorations to individualize a decoration (20, 21), said means consisting of said leaf (17) with which a rebound leaf (18) is associated fastened on the conformator (1) and equipping said cavity, the leaf (17) being able to move in a direction parallel to the contact plane between the rebound leaf (18) and the conformator (1) and perpendicular to the longitudinal axis of the piston (16), means (161, 162; 311, 312, 313) for keeping said decoration on said piston, and
- means (51, 61) for keeping said decoration (20, 21) in the cell of the mold.

7. The device according to claim 6, wherein the means for keeping the decoration on the piston and the means for keeping the decoration in the cell consist of suction means.
